# EUROPEAN PATENT SPECIFICATION

(11) **EP 0 577 438 B1**
(45) Date of publication and mention of the grant of the patent: **16.05.2001**
(21) Application number: 93305235.9
(22) Date of filing: 02.07.1993
(51) Int. Cl.: B01D 53/56, B01J 23/89, B01J 23/50

(54) **Exhaust gas cleaner and method of cleaning exhaust gas**
Vorrichtung und Verfahren zur Abgasreinigung
Dispositif et procédé pour la purification de gaz d'échappement

(30) Priority: 03.07.1992 JP 20063892; 05.10.1992 JP 29076092; 15.10.1992 JP 30284092; 15.10.1992 JP 30289192; 15.10.1992 JP 30289992; 23.10.1992 JP 30943392; 13.11.1992 JP 32889592; 20.11.1992 JP 33547892; 24.11.1992 JP 33658392; 25.12.1992 JP 35823592; 25.12.1992 JP 35831692; 25.12.1992 JP 35834892; 13.01.1993 JP 2056693
(43) Date of publication of application: 05.01.1994
(73) Proprietor: Kabushiki Kaisha Riken, Chiyoda-ku, Tokyo 102-0073 (JP)
(72) Inventor: Muramatsu, Gyo,, Kabushiki Kaisha Riken, Kumagaya-shi, Saitama-ken (JP); Ogiwara, Kazuhiko, Kabushiki Kaisha Riken, Kumagaya-shi, Saitama-ken (JP); Yoshida, Kiyohide, Kabushiki Kaisha Riken, Kumagaya-shi, Saitama-ken (JP); Abe, Akira, Kabushiki Kaisha Riken, Kumagaya-shi, Saitama-ken (JP); Irite, Naoko, c/o Kabushiki Kaisha Riken, Kumagaya-shi, Saitama-ken (JP); Mochida, Shoji, c/o Kabushiki Kaisha Riken, Kumagaya-shi, Saitama-ken (JP); Onai, Katsuji, c/o Kabushiki Kaisha Riken, Kumagaya-shi, Saitama-ken (JP)
(74) Representative: Calamita, Roberto

(56) References cited:
- EP-A- 0 362 960
- EP-A- 0 498 325
- DE-A- 4 008 371
- GB-A- 2 248 194
- US-A- 3 857 921

## Description

### BACKGROUND OF THE INVENTION

The present invention relates to an exhaust gas cleaner for cleaning an exhaust gas containing nitrogen oxides and oxygen in an amount larger than its stoichiometric amount relative to unburned components such as carbon monoxide, hydrogen, hydrocarbons in the exhaust gas, and a method of cleaning such an exhaust gas.

Various exhaust gases discharged from internal combustion engines such as automobile engines, etc., combustion apparatuses installed in factories, home fun heaters, etc. contain nitrogen oxides such as nitrogen monoxide, nitrogen dioxide (hereinafter referred to simply as "NOx") and oxygen in an amount larger than its stoichiometric amount relative to unburned components. The NOx is one of causes of air pollution such as photochemical smog and acidic rain, posing a serious problem of environmental pollution on a global scale. For these reasons, it is desired to remove NOx from exhaust gases emitted from various combustion equipment.

In the case of an exhaust gas from gasoline engines, NOx is usually removed by using so-called three-component catalysts. Also, in the case of large, stationary combustion apparatuses such as internal combustion engines for cogenerators, etc., ammonia is introduced into an exhaust gas, whereby nitrogen oxides in the exhaust gas are catalytically and selectively reduced.

However, in the case of an exhaust gas having a relatively high oxygen concentration such as those discharged from diesel engines and those discharged from gasoline engines operable in a lean condition, efficient removal of NOx cannot be achieved with the above-described three-component catalysts suitable for usual gasoline engines. Also, the reduction of NOx with ammonia introduced into an exhaust gas cannot be applied to movable exhaust gas sources such as automobiles, because this reduction system needs large apparatuses and poisonous, expensive ammonia.

There is an alternative method for reducing NOx, which comprises contacting an exhaust gas containing oxygen and NOx with a gaseous reducing agent such as hydrogen, carbon monoxide or hydrocarbons in the absence of a catalyst. However, since a catalyst is not used in this method, a large amount of the reducing agent should be added. Accordingly, this non-catalytic method is effective only for the exhaust gas having a relatively low oxygen concentration, which is generated by burning nearly at a theoretical air-fuel ratio.

There have been proposed methods of reducing NOx by adding to an exhaust gas a reducing agent in a larger amount than a stoichiometric amount relative to oxygen in the exhaust gas, in the presence of a catalyst such as zeolite with or without carrying a transition metal (Japanese Patent Laid-Open Nos. 63-100919, 63-283727 and 1-130735; Thesis 2A526, 1990, the 59th Spring Conference of the Japan Chemical Society; Theses 3L420, 3L422 and 3L423, 1990, the 60th Fall Conference of the Japan Chemical Society; and "Catalyst", Vol. 33, No. 2, 59 (1991)).

However, with the catalysts used in these methods, a high removal ratio of NOx cannot be achieved in a wide temperature range, and the NOx removal efficiency is poor when moisture is contained in the exhaust gas (an actual exhaust gas contains about 10% of moisture).

### OBJECT AND SUMMARY OF THE INVENTION

Accordingly, an object of the present invention is to provide an exhaust gas cleaner capable of efficiently removing NOx from an exhaust gas containing nitrogen oxide and oxygen in an amount larger than the stoichiometric amount relative to unburned components such as carbon monoxide, hydrogen, hydrocarbons, etc., which is discharged from diesel engines, gasoline engines operated under oxygen excess conditions, and stationary combustion apparatuses.

Another object of the present invention is to provide a method for reducing nitrogen oxide in the exhaust gas efficiently by means of the above exhaust gas cleaner.

As a result of intense research in view of the above objects, the inventors have found that in the exhaust gas containing nitrogen oxides and oxygen in an amount larger than its stoichiometric amount relative to unburned components such as carbon monoxide, hydrogen, hydrocarbons, nitrogen oxides are effectively reduced in a wide temperature range, even when the exhaust gas contains about 10% of moisture, in the presence of an exhaust gas cleaner comprising a porous inorganic oxide body and catalytically active components including silver or silver oxide and other metal or metal oxide by adding reducing agents such as hydrocarbons and/or oxygen-containing organic compounds such as aliphatic alcohols to the exhaust gas to cause a reaction between the reducing agents and nitrogen oxides.

The present invention provides an exhaust gas cleaner for cleaning an exhaust gas containing nitrogen oxides and oxygen in an amount larger than its stoichiometric amount relative to unburned components in said exhaust gas, which comprises a mixture of (1) a first catalyst comprising 0.1-15 weight % (on a metal basis), of a first catalytically active component consisting essentially of Ag supported on a porous inorganic oxide body; and (2) a second catalyst comprising 0.5-20 weight % (on a metal basis) of a second catalytically active component supported on a porous inorganic oxide body, said second catalytically active component consisting essentially of (i) at least one alkali metal element; (ii) at least one element selected from the group consisting of Cu, Co, Mn and V; and (iii) at least one rare earth element, all of said percentages being based on the amount of said porous inorganic oxide body on which each component is supported.

The invention also provides an exhaust gas cleaner for cleaning an exhaust gas containing nitrogen oxides and oxygen in an amount larger than its stoichiometric amount relative to unburned components in said exhaust gas, which comprises a cleaner substrate made of ceramics or metals, a first catalyst supported on said cleaner substrate on the exhaust gas inlet side thereof, and a second catalyst supported on said cleaner substrate on the exhaust gas outlet side thereof, wherein (1) said first catalyst comprises 0.1-15 weight % (on a metal basis) of a first catalytically active component consisting essentially of Ag supported on a first porous inorganic oxide body; and (2) said second catalyst comprises a second catalytically active component supported on a second porous inorganic oxide body, said second catalytically active component consisting essentially of (i) 0.1-15 weight % (on a metal basis) of Cu and optionally 4 weight % or less (on a metal basis) of at least one element selected from the group consisting of alkali metal elements and rare earth elements, or (ii) 2 weight % (on a metal basis) or less, but not including 0 weight %, of at least one element selected from the group consisting of Pt, Pd, Ru, Rh and Ir, all of said percentages being based on the amount of said porous inorganic oxide body on which each component is supported.

The invention also provides an exhaust gas cleaner for cleaning an exhaust gas containing nitrogen oxides and oxygen in an amount larger than its stoichiometric amount relative to unburned components in said exhaust gas, which comprises a first catalyst on the exhaust gas inlet side and a second catalyst on the exhaust gas outlet side, wherein
(1) said first catalyst comprises 0.2-20 weight % (on a metal basis) of a first catalytically active component supported on a first porous inorganic oxide body, said first catalytically active components consisting essentially of Ag and at least one element selected from the group consisting of Sn, Al, Ga and In; and
(2) said second catalyst comprises a second catalytically active component supported on a second porous inorganic oxide body, said second catalytically active component consisting essentially of 0.1-15 weight % (on a metal basis) of Cu and optionally 4 weight % or less (on a metal basis) of at least one element selected from the group consisting of alkali metal elements and rare earth elements,
all of said percentages being based on the amount of said porous inorganic oxide body on which each component is supported.

The invention further provides a method of cleaning an exhaust gas containing nitrogen oxides and oxygen in an amount larger than its stoichiometric amount relative to unburned components in said exhaust gas, which comprises
(a) disposing said exhaust gas cleaner as defined in any preceding claims, except for the exhaust gas cleaner containing the second catalytically active component (i), in a flow path of said exhaust gas;
(b) introducing hydrocarbons and/or oxygen-containing organic compounds into said exhaust gas on the upstream side of said exhaust gas cleaner; and (c) bringing said exhaust gas into contact with said exhaust gas cleaner at a temperature of 200-600°C, thereby removing said nitrogen oxides.

Additionally, the invention provides a method of cleaning an exhaust gas containing nitrogen oxides and oxygen in an amount larger than its stoichiometric amount relative to unburned components in said exhaust gas, which comprises (a) disposing said exhaust gas cleaner as defined in claims 3 or 4, except for the exhaust gas cleaner containing said second catalytically active component (i), in a flow path of said exhaust gas; and (b) bringing said exhaust gas into contact with said exhaust gas cleaner at a temperature of 200-600°C, thereby causing a reaction between said nitrogen oxides and hydrocarbons remaining in said exhaust gas to remove said nitrogen oxides.

The invention also provides a method of cleaning an exhaust gas containing nitrogen oxides and oxygen in an amount larger than its stoichiometric amount relative to unburned components in said exhaust gas, which comprises (a) disposing the exhaust gas cleaner containing said second catalytically active component (i) as defined in claims 3 or4 in a flow path of said exhaust gas; (b) introducing 400 volume % or less, based on said nitrogen oxides in said exhaust gas, of hydrocarbons which are gaseous in a standard state into said exhaust gas on the upstream side of said exhaust gas cleaner; and (c) bringing said exhaust gas into contact with said exhaust gas cleaner at a temperature of 250-600°C, thereby removing said nitrogen oxides.

### BRIEF DESCRIPTION OF THE DRAWINGS

Fig. 1 is a graph showing the relation between the removal ratio of NOx and the temperature of the exhaust gas in Example 1 and Comparative Example 1;
Fig. 2 is a graph showing the relation between the removal ratio of NOx and the temperature of the exhaust gas in Example 2 and Comparative Example 2;
Fig. 3 is a graph showing the relation between the removal ratio of NOx and the temperature of the exhaust gas in Example 3 and Comparative Examples 3 and 4;
Fig. 4 is a graph showing the relation between the removal ratio of NOx and the temperature of the exhaust gas in Examples 7-9 and Comparative Examples 7-8;

### DETAILED DESCRIPTION OF THE INVENTION

The present invention will be explained in detail below.

### [1] First Embodiment

### [A] Exhaust Gas Cleaner

The exhaust gas cleaner of the first embodiment comprises a mixture of a first catalyst comprising of a first catalytically active component consisting essentially of Ag; and a second catalyst comprising second catalytically active components consisting essentially of (i) at least one alkali metal element; (ii) at least one element selected from the group consisting of Cu, Co, Mn and V; and (iii) at least one rare earth clement. These catalytically active components are supported by a porous inorganic oxide body.

### (a) Porous Inorganic Oxide Body

The porous inorganic oxide body serves as sites of reaction between a reducing agent and nitrogen oxides in the exhaust gas. Since the porous inorganic oxide body is exposed to a high-temperature exhaust gas, it is required to have an excellent heat resistance, and particularly an excellent thermal shock resistance. Such a porous inorganic oxide body may preferably be constituted by porous pellets or granules packed in a casing, or in the form of a solid body such as a honeycomb, a foam, a plate, or a porous inorganic oxide powder layer formed on a heat-resistant substrate.

In the case of using the porous inorganic oxide powder layer formed on a heat-resistant substrate, the amount of the porous inorganic oxide powder is preferably 20-250 grams per 1 liter (apparent volume of substrate) (hereinafter referred to as "20 g/liter - 250 g/liter"), particularly 50 g/liter - 200 g/liter, based on the heat-resistant substrate.

Materials for the porous inorganic oxide body include ceramics such as alumina, titania, zirconia and their composites, etc. Particularly preferable materials for the porous inorganic oxide body are γ-alumina or its composite oxide such as titania-alumina, silica-alumina, zirconia-alumina, etc. With catalytically active γ-alumina, the reducing agent added and the nitrogen oxides in the exhaust gas are reacted efficiently.

Since NOx in the exhaust gas is reacted with a reducing agent while the exhaust gas is passing through the exhaust gas cleaner, it is preferable that the pressure drop of the exhaust gas in the exhaust gas cleaner is within a permissible range, and that the porous inorganic oxide body has a large surface area which is brought into contact with the exhaust gas. In the above respects, it is preferable that a specific surface area of the porous inorganic oxide body is about 30 m²/g or more. When the specific surface area is smaller than about 30 m²/g, a sufficient reaction between the nitrogen oxides in the exhaust gas and the reducing agent added cannot take place in the exhaust gas cleaner.

In the case of the porous inorganic oxide layer formed on a heat-resistant substrate, the heat-resistant substrate may be made of ceramics such as alumina, silica, titania, zirconia and their composites such as silica-alumina, alumina-zirconia, alumina-titania, silica-titania, silica-zirconia, titania-zirconia, mullite, cordierite, etc. The heat-resistant substrate may be in the form of a honeycomb filter, a foam filter, a fiber assembly filter, pellets, etc.

The porous inorganic oxide layer may be formed on the heat-resistant substrate by a known wash-coating method, a known sol-gel method, etc.

In the wash-coating method, the heat-resistant substrate is immersed in a slurry of the above ceramic powder and dried so that a porous inorganic oxide layer is formed on the heat-resistant substrate. To cause the porous inorganic oxide layer to support "a first catalytically active component comprising Ag or an oxide thereof and a second catalytically active component comprising the other metal components" (referred to simply as Ag, etc.), there are two methods available: (1) a method of applying Ag, etc. by impregnation or precipitation to the carrier layer (porous inorganic oxide layer) wash-coated on the heat-resistant substrate, and (2) a method of forming a porous inorganic oxide layer supporting Ag, etc. on the heat-resistant substrate by wash-coating the heat-resistant substrate with a suspension of ceramic powder containing Ag, etc. According to the latter method (2), the porous inorganic oxide layer supporting Ag, etc. can be formed by a single step.

In the sol-gel method, either one of the following two procedures can be conducted.

The first sol-gel method comprises hydrolyzing organic salts (for instance, alkoxides) of the porous inorganic oxide layer-constituting metals; applying the resulting Sol to the heat-resistant substrate; bringing the coated heat-resistant substrate into contact with water vapor, etc. to form a layer composed of colloidal particles; drying and heating it to convert it to a carrier layer for Ag, etc.; and applying Ag, etc. to the carrier layer. For instance, when Ag, etc. are to be supported by an alumina (Al₂O₃) carrier layer, a solution of Al alkoxide (for instance, Al(O-isoC₃H₇)₃) in alcohol is mixed with an acid such as CH₃COOH, HNO₃, HCl, etc. to prepare a coating solution, and the heat-resistant substrate is immersed in the coating solution. After removing the heat-resistant substrate from the coating solution, it is treated with vapor or water to cause gelation. After drying and heating, a thin alumina coating is formed on a porous surface of the heat-resistant substrate. Next, the coated heat-resistant substrate is impregnated with aqueous solutions of carbonates, nitrates, acetates, hydroxides, etc. of Ag; and the impregnated layer is dried and heated on the heat-resistant substrate.

In the second sol-gel method, the ceramic carrier materials and Ag, etc. are simultaneously applied to the heat-resistant substrate. For instance, a solution of Al alkoxide in alcohol is mixed with an acid such as CH₃COOH, HNO₃, HCl, etc. and an aqueous solution of a silver salt to prepare a coating solution, and the heat-resistant substrate is immersed in the coating solution. After removing the heat-resistant substrate from the coating solution, it is treated with vapor or liquid water to prepare a sol, which is then converted to a gel. The gel is dried and then heated to provide a ceramic carrier supporting Ag, etc.

By using the sol-gel method, Ag, etc. can be extremely uniformly dispersed in the heat-resistant substrate, leading to an increase in catalytic activity.

In the sol-gel method, the acid serves as a hydrolysis catalyst in the course of gelation. However, alkali metals may be added in place of the acids to conduct the hydrolysis reaction.

### (b) First Catalyst

The first catalyst comprises a first catalytically active component consisting essentially of Ag supported by a porous inorganic oxide body. The amount of Ag or an oxide thereof is generally 0.1-15 weight % (on a metal basis) based on the total amount of the porous inorganic oxide body. When the amount of Ag or an oxide thereof is less than 0.1 weight %, sufficient effect of Ag or an oxide thereof cannot be obtained. On the other hand, even when the amount of Ag or an oxide thereof exceeds 15 weight %, further advantage of increasing the efficiency of reducing nitrogen oxides cannot be achieved. To increase the NOx-removing efficiency, Ag or an oxide thereof added is preferably 0.5-10 weight %. Incidentally, it should be noted that when the term "Ag" is used instead of "Ag or an oxide thereof," it is intended to include a silver oxide.

With respect to the production of the exhaust gas cleaner, the porous inorganic oxide body is first immersed in an aqueous solution of a silver salt such as silver nitrate, and then dried and heated. The substrate having a porous inorganic oxide layer impregnated with Ag or an oxide thereof may also be produced under the same conditions.

The porous inorganic oxide body is preferably dried and then heated in a non-oxidizing atmosphere such as vacuum, a nitrogen atmosphere, or a hydrogen atmosphere. The drying of the porous inorganic oxide body is preferably conducted at about 70°C or higher. With respect to the heating conditions, when the heating is conducted in the above atmosphere, the resulting exhaust gas cleaners are catalytically more active than those heated in the air. Also, the heating of the exhaust gas cleaner is preferably conducted at a temperature elevating stepwise from about 100°C to about 600°C in the above non-oxidizing atmosphere, and then at about 500°C or higher in an oxygen-containing atmosphere.

The exhaust gas cleaner carrying Ag or its oxide is preferably treated with an SO₂-containing gas. In general, 1 g of the exhaust gas cleaner carrying Ag or its oxide is brought into contact with 0.02-1 mmol of SO₂. When the amount of SO₂ is smaller than 0.02 mmol, sufficient effect of treatment cannot be achieved. On the other hand, even when the amount of SO₂ exceeds 1 mmol, further improvement of the catalytic activity cannot be obtained.

With the exhaust gas cleaner treated with SO₂, hydrocarbons and/or oxygen-containing organic compounds added are not directly oxidized by oxygen in the exhaust gas. Accordingly, sufficient reaction between the nitrogen oxides and the hydrocarbons and/or oxygen-containing organic compounds can proceed at such a low temperature as about 250-400°C.

### (c) Second Catalyst

The second catalyst comprises second catalytically active components supported by a porous inorganic oxide body. The second catalytically active components consist essentially of (i) at least one alkali metal element (Li, Na, K, Cs, etc.); (ii) at least one element selected from the group consisting of Cu, Co, Mn and V; and (iii) at least one rare earth element (Ce, La, Nd, Sm, etc.).

The component (i) is preferably K and/or Cs. With respect to the component (ii), Cu is preferable, and one or more of the other elements (Co, Mn and V) may be added to Cu. The component (iii) may be preferably Ce and/or La. Incidentally, it should be noted that these elements exist in the form of oxides under the usual operation conditions of the exhaust gas cleaner.

The amounts of the three components (i), (ii) and (iii), respectively, expressed as weight percentage of metal elements therein, are (i) 20% or less, (ii) 60% or more, and (iii) 20% or less, respectively.

If the components (i) and (iii) are more than 20% or if the component (ii) is less than 60%, the removal ratio of NOx at low temperatures would be low. Preferably, (i) is 15% or less, (ii) is 70% or more, and (iii) is 15% or less, and particularly (i) is 0.1-15%, (ii) is 75-99%, and (iii) is 0.1-15%.

The total amount of (i) + (ii) + (iii) is generally 0.5-20 weight %, preferably 0.5-15 weight % based on the porous inorganic oxide body. If the total amount of (i) + (ii) + (iii) is lower than 0.5 weight %, sufficient effect of carrying the second catalytic components cannot be obtained. On the other hand, if it exceeds 20 weight %, the burning of hydrocarbons would predominantly take place, resulting in the reduced removal of NOx.

### (d) Ratio of First Catalyst to Second Catalyst

The mixture ratio by weight of the first catalyst to the second catalyst is preferably 5:1 - 1:5. When the first catalyst and the second catalyst are mixed at this ratio, the removal of NOx can be achieved in such a wide temperature range as 200-600°C, particularly 250-600°C. If the mixture ratio is lower than 1:5 (if the amount of the first catalyst is too small), the removal of NOx would be low in a wide temperature range of 250-600°C. On the other hand, if the mixture ratio is higher than 5:1 (if the amount of the first catalyst is too large), the removal of NOx would be low at a temperature of 400°C or lower, failing to achieve a sufficient reaction of NOx with the hydrocarbons added to the exhaust gas.

### [B] Method of Cleaning Exhaust Gas

The method of the first embodiment comprises disposing the exhaust gas cleaner in a flow path of the exhaust gas; introducing reducing agents such as hydrocarbons and/or oxygen-containing organic compounds into the exhaust gas on the upstream side of the exhaust gas cleaner; and bringing the exhaust gas into contact with the exhaust gas cleaner at a temperature of 200-600°C, thereby removing the nitrogen oxides.

### (a) Reducing Agents

The exhaust gas discharged from diesel engines, etc. contains small amounts of hydrocarbons such as acetylene, ethylene, propylene, etc. which can act as reducing agents for reducing the nitrogen oxides in the exhaust gas. In general, the proportion of the unburned hydrocarbons remaining in the exhaust gas is about 40 ppm, and it can be increased to some extent by adjusting engine conditions, etc. However, when hydrocarbons do not remain in the exhaust gas in sufficient amount to reduce nitrogen oxides in the exhaust gas, reducing agents such as hydrocarbons and/or oxygen-containing organic compounds are added to the exhaust gas on the upstream side of the exhaust gas cleaner in a flow path of the exhaust gas.

### (1) Hydrocarbons

The hydrocarbons added to the exhaust gas may be in the form of a liquid or a gas.

The liquid hydrocarbons, which are in a liquid state in a standard state (room temperature and 1 atm), include diesel oil, cetane, heptane, kerosene, etc. The boiling point of the liquid hydrocarbon is from room temperature to about 350°C. Preferred examples of such hydrocarbons are diesel oil, cetane, heptane, etc. When a hydrocarbon having a boiling point exceeding about 450°C is added, it is not easily evaporated at an exhaust gas temperature under a normal operation condition, failing to accelerate the reduction of NOx. For safe operation, the upper limit of the boiling temperature of the liquid hydrocarbon is set at about 400°C. Preferably, a liquid hydrocarbon having a boiling point of about 350°C or lower, particularly 90-350°C is used. Such a liquid hydrocarbon is typically diesel oil, cetane, kerosene, etc., which are used as engine fuels, for a practical reason.

The gaseous hydrocarbons (alkanes, alkenes or alkynes) are in a gaseous state in a standard state. The preferred alkanes are propane, butane, etc., the preferred alkenes are ethylene, propylene, butylene, etc., and the preferred alkynes are acetylene, etc.

### (2) Oxygen-Containing Organic Compounds

The oxygen-containing organic compounds have 2 or more carbon atoms and 1 or more oxygen atoms. Specific examples of such oxygen-containing organic compounds include alcohols, ketones, aldehydes, carboxylic acids, ethers, esters, etc. The upper limit of the carbon number in the oxygen-containing organic compound is preferably determined such that the boiling point of the oxygen-containing organic compound does not exceed 400°C.

### (i) Alcohols

As alcohols, monovalent aliphatic alcohols having low molecular weights such as ethanol, propanol (n-propyl alcohol, isopropyl alcohol), etc. are preferable. However, methanol is not effective to react with nitrogen oxides. Accordingly, the carbon number of the aliphatic alcohol is preferably restricted to 2 or more.

### (ii) Ketones

As ketones, acetone may be used.

### (iii) Carboxylic Acids

As carboxylic acids, acetic acid is particularly preferable.

### (iv) Aldehydes

As aldehydes, acetaldehyde is particularly preferable.

### (3) Amount of Reducing Agent Added

The amount of the hydrocarbon and/or the oxygen-containing organic compound added is properly determined depending on the amount of NOx in the exhaust gas. Specifically, a weight ratio of the hydrocarbon and/or the oxygen-containing organic compound to NOx in the exhaust gas is 0.2-5. When the weight ratio of the hydrocarbon and/or the oxygen-containing organic compound to NOx is less than 0.2, sufficient effect of adding the hydrocarbon and/or the oxygen-containing organic compound cannot be obtained. The upper limit of the weight ratio of the hydrocarbon and/or the oxygen-containing organic compound to NOx is determined from the economic point of view. The preferred weight ratio is 0.2-3.

### (b) Temperature of Exhaust Gas

The exhaust gas passing through the exhaust gas cleaner is kept at a temperature of 200-600°C. When the temperature of the exhaust gas is lower than 200°C, a sufficient reaction between the nitrogen oxides and hydrocarbon and/or oxygen-containing organic compound cannot proceed. On the other hand, when the temperature of the exhaust gas is higher than 600°C, the hydrocarbon and/or oxygen-containing organic compound is burned, failing to reduce the nitrogen oxides effectively. The more preferred temperature of the exhaust gas is 250-600°C.

### (c) Contact Time

How long it takes for the exhaust gas to pass through the exhaust gas cleaner is expressed by a product of a time period during which a unit amount of the exhaust gas is in contact with the exhaust gas cleaner and the amount of the catalyst. This product is defined as "contact time." The unit of the contact time is sec·g/ml, wherein "g" is a weight of the exhaust gas cleaner, and "ml/sec" is a volume of the exhaust gas which comes into contact with the catalyst per a second (converted to a volume in a standard state of 1 atm and room temperature). For instance, when 1 ml/sec (converted to a volume in a standard state) of an exhaust gas is brought into contact with 1 g of the catalyst for 0.03 seconds, the contact time is 0.03 sec·g/ml.

In the first embodiment, the contact time is 0.006 sec·g/ml or more. When the contact time is less than 0.006 sec·g/ml, a sufficient reaction does not take place between the nitrogen oxides and the reducing agent, resulting in a low removal ratio of nitrogen oxides. Also, the unreacted reducing agent remains in the exhaust gas which is to be discharged.

On the other hand, when the contact time is too large, the exhaust gas cleaner becomes too large. Accordingly, the upper limit of the contact time is preferably 0.5 sec·g/ml.

### [2] Second Embodiment

### [A] Exhaust Gas Cleaner

The exhaust gas cleaner of the second embodiment comprises a cleaner substrate, a first catalyst supported by the cleaner substrate on the exhaust gas inlet side thereof, and a second catalyst supported by the cleaner substrate on the exhaust gas outlet side thereof, wherein (1) the first catalyst comprises a first catalytically active component consisting essentially of Ag supported by a porous inorganic oxide body, and (2) the second catalyst comprises a second catalytically active component consisting essentially of Cu supported by a porous inorganic oxide body. The second catalytically active component may further contain at least one element selected from the group consisting of alkali metal elements and rare earth elements.

### (a) Cleaner Substrate

The cleaner substrate may be made of ceramics such as γ-alumina and composite oxides thereof (titania-alumina, silica-alumina, zirconia-alumina, etc.). When high heat resistance is required, cordierite and mullite may also be used. In addition, known heat-resistant metals such as stainless steel, etc. may be used for the cleaner substrate.

The size and shape of the cleaner substrate may be changed depending on the purposes. For practical reason, the cleaner substrate preferably consists of two parts arranged on the inlet side and the outlet side. The internal structure of the cleaner substrate is honeycomb, foam, fibrous, or other three-dimensional structure. Also, the outer structure of the cleaner substrate may be a plate, a disc, a pellet, etc.

### (b) Porous Inorganic Oxide Body

The porous inorganic oxide body used in the second embodiment is preferably in the form of fine powder which can be coated onto the cleaner substrate. The materials for the porous inorganic oxide powder may be the same as in the first embodiment. The amount of the porous inorganic oxide powder is preferably 20 g/liter - 250 g/liter, particularly 50 g/liter - 200 g/liter, based on the heat-resistant cleaner substrate.

The porous inorganic oxide powder layer may be formed on the heat-resistant cleaner substrate by the same method as described in the first embodiment.

### (c) First Catalyst

The first catalyst comprises a first catalytically active component consisting essentially of Ag supported by a porous inorganic oxide powder. The amount of Ag or an oxide thereof is generally 0.1-15 weight % (on a metal basis) based on the total amount of the porous inorganic oxide powder. To increase the NOx-removing efficiency, Ag or an oxide thereof added is preferably 0.5-10 weight %.

The cleaner substrate having a porous inorganic oxide layer impregnated with Ag or an oxide thereof may be produced in the same manner as in the first embodiment. Incidentally, the exhaust gas cleaner carrying Ag or its oxide is preferably treated with an SO₂-containing gas.

### (d) Second Catalyst

The second catalyst comprises second catalytically active components supported by a porous inorganic oxide body. The second catalytically active component consists essentially of Cu. The amount of Cu, expressed as a weight percentage of a metal element itself, is 0.1-15%. If Cu is less than 0.1% or more than 15%, the removal ratio of NOx would be low. The preferred amount of Cu is 0.5-12%.

The second catalyst may be a combination of Cu and at least one element selected from the group consisting of alkali metal elements and rare earth elements. The alkali metal element may be Li, Na, K, Cs, etc., preferably K and/or Cs, and the rare earth element may be Ce, La, Nd, Sm, etc., preferably Ce and/or La.

The total amount of the alkali metal element and the rare earth element is 4 weight % or less, preferably 0.5-3 weight %. Further, the amount of the alkali metal element is preferably 2 weight % or less, and the amount of the rare earth element is preferably 2 weight % or less. If both of the alkali metal element and the rare earth element are more than 2 weight %, the removal ratio of NOx would be low. More preferably, each of the alkali metal element and the rare earth element is 0.1-1.5 weight %.

The total amount of (i) Cu + (ii) alkali metal element and/or rare earth element is generally 0.1-19 weight %, preferably 0.5-15 weight % based on the porous inorganic oxide body. If the total amount of (i) + (ii) is lower than 0.1 weight %, sufficient effect of carrying the second catalytic components cannot be obtained. On the other hand, if it exceeds 19 weight %, the burning of hydrocarbons would predominantly take place, resulting in the reduced removal of NOx.

Incidentally, the second catalyst may be supported by the cleaner substrate in the same manner as the first catalyst.

### (e) Arrangement of First Catalyst to Second Catalyst

In the second embodiment, the first catalyst is disposed on the exhaust gas inlet side, and the second catalyst is disposed on the exhaust gas outlet side in the exhaust gas cleaner. With this arrangement, high removal ratio of NOx can be achieved.

### (f) Ratio of First Catalyst to Second Catalyst

The ratio by weight of the first catalyst to the second catalyst is preferably 5:1 - 1:5. When the first catalyst and the second catalyst are arranged at this ratio, the removal of NOx can be achieved in such a wide temperature range as 200-600°C, particularly 250-600°C for the reason as mentioned in the first embodiment.

### [B] Method of Cleaning Exhaust Gas

The method of the second embodiment comprises disposing an exhaust gas cleaner in a flow path of the exhaust gas; introducing hydrocarbons and/or oxygen-containing organic compounds into the exhaust gas on the upstream side of the exhaust gas cleaner; and bringing the exhaust gas into contact with the exhaust gas cleaner at a temperature of 200-600°C, thereby removing the nitrogen oxides.

### (a) Reducing Agents

The reducing agents such as hydrocarbons and/or oxygen-containing organic compounds may be the same as in the first embodiment. A weight ratio of the hydrocarbon and/or the oxygen-containing organic compound to NOx in the exhaust gas is preferably 0.2-5. The preferred weight ratio is 0.2-3.

### (b) Temperature of Exhaust Gas

The exhaust gas passing through the exhaust gas cleaner is kept at a temperature of 200-600°C. The more preferred temperature of the exhaust gas is 250-600°C.

### (c) Contact Time

The contact time may be the same as in the first embodiment.

### [3] Third Embodiment

### [A] Exhaust Gas Cleaner

The exhaust gas cleaner of the third embodiment comprises a cleaner substrate, a first catalyst supported by the cleaner substrate on the exhaust gas inlet side thereof, and a second catalyst supported by the cleaner substrate on the exhaust gas outlet side thereof, wherein (1) the first catalyst comprises a first catalytically active component consisting essentially of Ag supported by a porous inorganic oxide body, and (2) the second catalyst comprises a second catalytically active component supported by a porous inorganic oxide body, the second catalytically active component consisting essentially of at least one element selected from the group consisting of Pt, Pd, Ru, Rh and Ir.

### (a) Porous Inorganic Oxide Body

The porous inorganic oxide body used in the third embodiment may be the same as in the first embodiment. The amount of the porous inorganic oxide powder is preferably 20 g/liter - 250 g/liter, particularly 50 g/liter - 200 g/liter, based on a heat-resistant cleaner substrate, if any. The porous inorganic oxide powder layer may be formed on the heat-resistant cleaner substrate by the same method as described in the first embodiment.

### (b) First Catalyst

The first catalyst comprises a first catalytically active component consisting essentially of Ag supported by a porous inorganic oxide powder. The amount of Ag or an oxide thereof is generally 0.1-15 weight % (on a metal basis) based on the total amount of the porous inorganic oxide powder. To increase the NOx-removing efficiency, Ag or an oxide thereof added is preferably 0.5-10 weight %.

The cleaner substrate having a porous inorganic oxide layer impregnated with Ag or an oxide thereof may be produced in the same manner as in the first embodiment. Incidentally, the exhaust gas cleaner carrying Ag or its oxide is preferably treated with an SO₂-containing gas.

### (c) Second Catalyst

The second catalyst comprises second catalytically active components supported by a porous inorganic oxide body. The second catalytically active component consists essentially of at least one element selected from the group consisting of Pt, Pd, Ru, Rh and Ir. The amount of the second catalytically active component, expressed as a weight percentage of a metal element itself, is 2% or less, preferably 0.1-1.5%. The second catalyst may be prepared in the same manner as the first catalyst.

The second catalyst preferably further contains at least one rare earth element such as La, Ce, etc. in an amount of 10 weight % or less. With the rare earth element, the heat resistance of Pt, etc. can be increased.

### (d) Arrangement of First Catalyst to Second Catalyst

In the third embodiment, the first catalyst is disposed on the exhaust gas inlet side, and the second catalyst is disposed on the exhaust gas outlet side in the exhaust gas cleaner. With this arrangement, high removal ratio of NOx can be achieved.

### (e) Ratio of First Catalyst to Second Catalyst

The ratio by weight of the first catalyst to the second catalyst is preferably 5:1 - 1:5. When the first catalyst and the second catalyst are arranged at this ratio, the removal of NOx can be achieved in such a wide temperature range as 200-600°C, particularly 250-600°C even when about 10% of water is contained in the exhaust gas. The more preferred ratio is 4:1 - 1:4.

### [B] Method of Cleaning Exhaust Gas

The method of the third embodiment comprises disposing an exhaust gas cleaner in a flow path of the exhaust gas; introducing hydrocarbons and/or oxygen-containing organic compounds into the exhaust gas on the upstream side of the exhaust gas cleaner; and bringing the exhaust gas into contact with the exhaust gas cleaner at a temperature of 200-600°C, thereby removing the nitrogen oxides.

### (a) Reducing Agents

The reducing agents such as hydrocarbons and/or oxygen-containing organic compounds added to the exhaust gas may be the same as in the first embodiment.

A weight ratio of the hydrocarbon and/or the oxygen-containing organic compound to NOx in the exhaust gas is preferably 0.1-5 as in the first embodiment. The preferred weight ratio is 0.2-3.

### (b) Temperature of Exhaust Gas

The exhaust gas passing through the exhaust gas cleaner is kept at a temperature of 200-600°C. The more preferred temperature of the exhaust gas is 300-600°C.

### (c) Contact Time

The contact time may be the same as in the first embodiment.

### [4] Fourth Embodiment

### [A] Exhaust Gas Cleaner

The exhaust gas cleaner of the fourth embodiment comprises a cleaner substrate, a first catalyst supported by the cleaner substrate on the exhaust gas inlet side thereof, and a second catalyst supported by the cleaner substrate on the exhaust gas outlet side thereof, wherein (1) the first catalyst comprises first catalytically active components supported by a porous inorganic oxide body, the first catalytically active components consisting essentially of Ag and at least one element selected from the group consisting of Sn, Al, Ga and In; and (2) the second catalyst comprises a second catalytically active component consisting essentially of Cu supported by a porous inorganic oxide body.

### (a) Porous Inorganic Oxide Body

The porous inorganic oxide body used in the fourth embodiment may be the same as in the first embodiment. The porous inorganic oxide powder layer may be formed on the heat-resistant cleaner substrate by the same method as described in the first embodiment.

### (b) First Catalyst

The first catalyst comprises first catalytically active components consisting essentially of Ag and at least one element selected from the group consisting of Sn, Al, Ga and In. The total amount of the first catalytically active components is generally 0.2-20 weight % (on a metal basis) based on the total amount of the porous inorganic oxide powder. The preferred total amount of the first catalytically active components is 0.5-15 weight %.

Among the first catalytically active components, Ag or an oxide thereof is preferably 0.1-10 weight % (on a metal basis), and at least one element selected from the group consisting of Sn, Al, Ga and In is preferably 0.1-10 weight % (on a metal basis), each based on the total amount of the porous inorganic oxide powder. Incidentally, silver may exist in the form of a metal or an oxide, and Sn, etc. may exist in the form of an oxide at the exhaust gas temperature.

The cleaner substrate having a porous inorganic oxide layer impregnated with Ag and Sn, etc. may be produced in the same manner as in the first embodiment. Incidentally, the exhaust gas cleaner carrying Ag or its oxide is preferably treated with an SO₂-containing gas.

### (c) Second Catalyst

The second catalyst comprises a second catalytically active component consisting essentially of Cu supported by a porous inorganic oxide body. The second catalytically active component may further contain at least one element selected from the group consisting of alkali metal elements and rare earth elements as in the second embodiment. The alkali metal element may be Li, Na, K, Cs, etc., preferably K and/or Cs, and the rare earth element may be Ce, La, Nd, Sm, etc., preferably Ce and/or La.

The amount of Cu is 0.1-15 weight %. If Cu is less than 0.1 weight % or more than 15 weight %, the removal ratio of NOx would be low. The preferred amount of Cu is 0.5-12 weight %.

When the alkali metal element and the rare earth element are added, the total amount thereof is 4 weight % or less, preferably 0.2-3 weight %. Further, the amount of the alkali metal element is preferably 0.01-2 weight %, and the amount of the rare earth element is preferably 0.01-2 weight %. If both of the alkali metal element and the rare earth element are more than 2 weight %, the removal ratio of NOx would be low. More preferably, each of the alkali metal element and the rare earth element is 0.1-1.5 weight %.

The total amount of (i) Cu + (ii) alkali metal element and/or rare earth element is generally 0.1-19 weight %, preferably 0.5-15 weight % based on the porous inorganic oxide body. If the total amount of (i) + (ii) is lower than 0.1 weight %, sufficient effect of carrying the second catalytic components cannot be obtained. On the other hand, if it exceeds 19 weight %, the burning of hydrocarbons would predominantly take place, resulting in the reduced removal of NOx.

Incidentally, the second catalyst may be prepared in the same manner as the first catalyst.

### (d) Arrangement of First Catalyst to Second Catalyst

In the fourth embodiment, the first catalyst is disposed on the exhaust gas inlet side, and the second catalyst is disposed on the exhaust gas outlet side in the exhaust gas cleaner. With this arrangement, high removal ratio of NOx can be achieved.

### (e) Ratio of First Catalyst to Second Catalyst

The ratio by weight of the first catalyst to the second catalyst is preferably 5:1 - 1:5. The more preferred ratio is 4:1 - 1:4. With this combination, high removal ratio can be achieved even when about 10% of water is contained in the exhaust gas.

### [B] Method of Cleaning Exhaust Gas

The method of the fourth embodiment comprises disposing an exhaust gas cleaner in a flow path of the exhaust gas; and bringing the exhaust gas into contact with the exhaust gas cleaner at a temperature of 200-600°C, thereby removing the nitrogen oxides. The hydrocarbons and/or oxygen-containing organic compounds may be introduced into the exhaust gas on the upstream side of the exhaust gas cleaner to increase the removal ratio of NOx.

### (a) Reducing Agents

The reducing agents such as hydrocarbons and/or oxygen-containing organic compounds added to the exhaust gas may be the same as in the first embodiment.

A weight ratio of the hydrocarbon and/or the oxygen-containing organic compound to NOx in the exhaust gas is preferably 0.1-5 as in the first embodiment. The preferred weight ratio is 0.2-3.

### (b) Temperature of Exhaust Gas

The exhaust gas passing through the exhaust gas cleaner is kept at a temperature of 200-600°C. The more preferred temperature of the exhaust gas is 300-600°C.

### (c) Contact Time

The contact time may be the same as in the first embodiment.

Incidentally, in the above explanations, the catalytically active components are expressed as metal elements themselves such as Ag, Cu, etc. for simplicity, but it should be noted that these catalytically active components may exist in the form of oxide. Therefore, it is intended that the catalytically active components expressed only by metal elements include their oxides.

The present invention will be described in further detail by way of the following Examples. In each Example and Comparative Example, the catalytically active components are expressed as metal elements simplicity, and the amounts of the catalytically active components are expressed on a metal basis.

### Example 1

Commercially available pellets made of porous γ-alumina (diameter: 1.5 mm, length: about 6 mm, specific surface area: 200 m²/g) were immersed in an aqueous solution of AgNO₃, dried at 70°C and heated at 150°C, 200°C, 300°C, 400°C, 500°C and 600°C each for 2 hours in a nitrogen stream containing 5 volume % of hydrogen and finally at 500°C for 2 hours in a nitrogen stream containing 10 volume % of oxygen, to obtain a first cleaner portion in which 2 weight % (on a metal basis) of Ag was supported by the γ-alumina pellets.

Commercially available pellets made of porous γ-alumina (diameter: 1.5 mm, length: about 6 mm, specific surface area: 200 m²/g) were immersed in an aqueous solution of Cu(NO₃)₂, an aqueous solution of La(NO₃)₃, and an aqueous solution of CsNO₃, respectively to impregnate the pellets with 10.0 weight % (on a metal basis) of Cu(NO₃)₂, 0.4 weight % (on a metal basis) of La(NO₃)₃ and 0.4 weight % (on a metal basis) of CsNO₃, each based on γ-alumina. The pellets were dried and heated at 700°C to provide a second cleaner portion. Incidentally, Cu, La and Cs exited in the form of oxides in the second cleaner portion.

The first and second cleaner portions were mixed with each other at a weight ratio of 1:1, and 1.34 g of the resulting mixture was charged into a reactor pipe.

Next, a test gas having a composition shown in Table 1 below was caused to pass through the reactor pipe at a rate of 1.75 liters per minute (in a standard state), which corresponded to a space velocity of 30,000 h⁻¹ and a contact time of 0.05 sec·g/ml. The temperature of the test gas was kept at 200-550°C in the reactor pipe to cause a reaction between the nitrogen monoxide in the test gas with propylene.

**Table 1**

| Component | Concentration |
|---|---|
| Nitrogen monoxide | 800 ppm |
| Carbon dioxide | 10 volume % |
| Oxygen | 10 volume % |
| Propylene | 1714 ppm |
| Nitrogen | Balance |
| Water | 10 volume % based on the total (100 volume %) of the above components. |

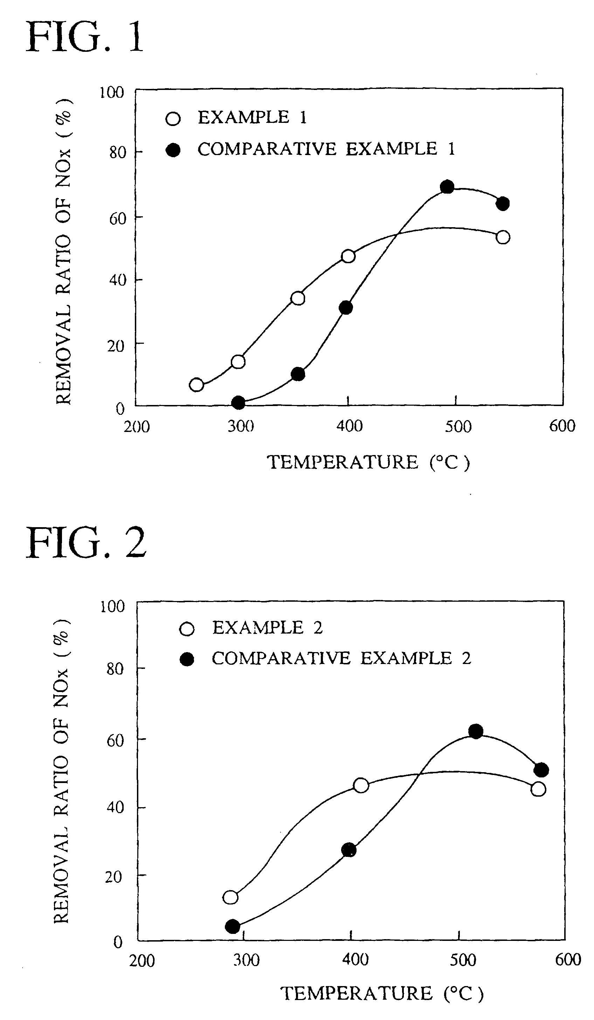

By passing through the reactor pipe, nitrogen monoxide was converted to nitrogen and nitrogen dioxide. Accordingly, the concentration of NOx (sum of nitrogen monoxide and nitrogen dioxide) in the test gas after passing through the exhaust gas cleaner was measured by a chemiluminescence analyzer to determine the removal ratio of NOx. Incidentally, the removal ratio of NOx was calculated from the amount (Xa) of NOx in exhaust gas before entering into the filter, and the amount of (Xb) of NOx in exhaust gas after passage through the filter, by using the formula: [(Xa - Xb) / Xa] x 100%. The results are shown in Fig. 1.

### Comparative Example 1

With the first cleaner portion used in Example 1 (porous γ-alumina pellets carrying Ag) only, the same procedures as in Example 1 were conducted to measure the removal ratio of NOx. The results are shown in Fig. 1.

### Example 2

With a test gas having a composition shown in Table 2 below, Example 1 was repeated to measure the removal ratio of NOx. The results are shown in Fig. 2.

**Table 2**

| Component | Concentration |
|---|---|
| Nitrogen monoxide | 800 ppm |
| Carbon dioxide | 10 volume % |
| Oxygen | 10 volume % |
| Diesel oil | 3 times the weight of NO |
| Nitrogen | Balance |
| Water | 10 volume % based on the total (100 volume %) of the above components. |

### Comparative Example 2

With the cleaner used in Comparative Example 1, the same procedures as in Example 1 were conducted by using the test gas having a composition shown in Table 2 to measure the removal ratio of NOx. The results are shown in Fig. 2.

As is clear from Figs. 1 and 2, the NOx was well removed in such a wide temperature range as 250-550°C in Examples 1 and 2, while the removal ratio of NOx was extremely low at an exhaust gas temperature of 400°C or lower in Comparative Examples 1 and 2.

### Example 3

Porous γ-Al₂O₃ powder was impregnated with 5 weight % of Ag by using an aqueous solution of AgNO₃, and a commercially available honeycomb-type cordierite filter (diameter: 20 mm, thickness: about 8.4 mm, specific surface area: 200 m²/g) was coated with about 0.5 g of the above γ-Al₂O₃ powder carrying Ag, dried and heated at a temperature up to 600°C to obtain a first cleaner portion.

Similarly, γ-Al₂O₃ powder was impregnated with 10.0 weight % of Cu by using an aqueous solution of Cu(NO₃)₂, 0.4 weight % of La by using an aqueous solution of La(NO₃)₃, and 0.4 weight % of Cs by using an aqueous solution of CsNO₃. 0.5 g of this γ-Al₂O₃ carrying Cu, La and Cs was applied to a similar honeycomb-type cordierite filter, dried and heated at a temperature up to 600°C to obtain a second cleaner portion.

The first and second cleaner portions were set in a reactor pipe such that the first cleaner portion carrying the silver catalyst was disposed on the exhaust gas inlet side, and the second cleaner portion carrying the copper-based catalyst was disposed on the exhaust gas outlet side.

Next, a test gas having a composition shown in Table 3 below was caused to pass through the reactor pipe at a rate of 2.4 liters per minute (in a standard state), which corresponded to a space velocity of 56,000 h⁻¹ and a contact time of 0.013 sec·g/ml.

**Table 3**

| Component | Concentration |
|---|---|
| Nitrogen monoxide | 800 ppm |
| Oxygen | 10 volume % |
| Propylene | 1714 ppm |
| Nitrogen | Balance |
| Water | 10 volume % based on the total (100 volume %) of the above components. |

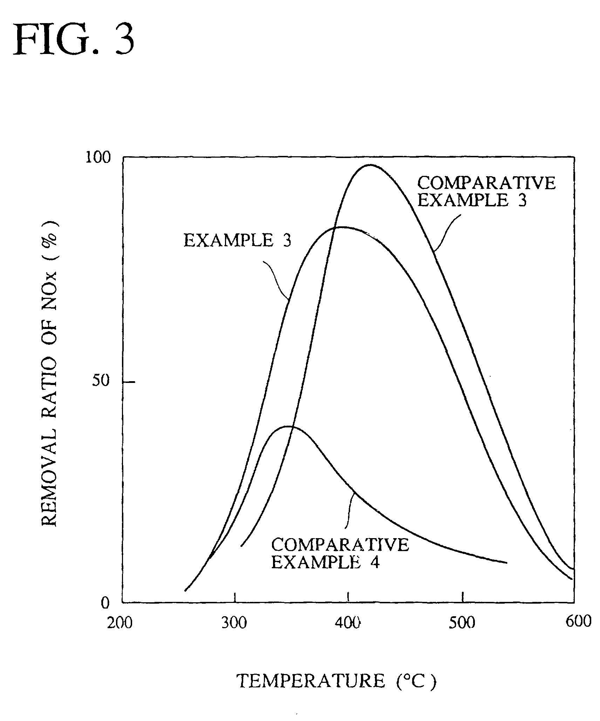

The temperature of the test gas was kept at 200-600°C in the reactor pipe to cause a reaction between the nitrogen monoxide in the test gas with propylene. The concentration of NOx (sum of nitrogen monoxide and nitrogen dioxide) in the test gas after passing through the exhaust gas cleaner was measured by a chemiluminescence analyzer to determine the removal ratio of NOx. The results are shown in Fig. 3.

### Comparative Example 3

A commercially available honeycomb-type cordierite filter (diameter: 20 mm, thickness: about 16.8 mm, specific surface area: 200 m²/g) was coated with 1 g of a first catalyst layer of Example 3 consisting of porous γ-Al₂O₃ powder and silver, and charged into a reactor pipe in the same manner as in Example 3 to measure the removal ratio of NOx. The results are shown in Fig. 3.

### Comparative Example 4

A commercially available honeycomb-type cordierite filter (diameter: 20 mm, thickness: about 16.8 mm, specific surface area: 200 m²/g) was coated with 1 g of a second catalyst layer of Example 3 consisting of porous γ-Al₂O₃ powder and Cu, La and Cs, and charged into a reactor pipe in the same manner as in Example 3 to measure the removal ratio of NOx. The results are shown in Fig. 3.

As is clear from Fig. 3, the NOx was well removed in a wide temperature range in Example 3, while the removal ratio of NOx was extremely low at an exhaust gas temperature of 400°C or lower in Comparative Example 3. Also, in Comparative Example 4, the removal ratio of NOx was extremely low in a wide temperature range.

### Example 4

10 g of commercially available pellets made of porous γ-alumina (diameter: 1.5 mm, length: about 6 mm, specific surface area: 200 m²/g) were immersed in an aqueous solution of AgNO₃, dried and heated at temperatures up to 600°C stepwise to obtain a first cleaner portion in which 2 weight % (on a metal basis) of Ag was supported by the γ-alumina pellets. 2 g of similar commercially available γ-alumina pellets were immersed in an aqueous solution of chloroplatinic acid to impregnate the pellets with 0.2 weight % of Pt. After drying, the pellets were heated at temperatures up to 700°C to obtain a second cleaner portion.

The first and second cleaner portions were set in a reactor pipe such that 10 g of the first cleaner portion containing the silver catalyst was disposed on the exhaust gas inlet side, and 1 g of the second cleaner portion containing the Pt catalyst was disposed on the exhaust gas outlet side.

Next, a test gas having a composition shown in Table 4 below was caused to pass through the reactor pipe at a rate of 2.0 liters per minute (in a standard state), which corresponded to a space velocity of 8,000 h⁻¹, a silver catalyst contact time of 0.3 sec·g/ml, and a Pt catalyst contact time of 0.03 sec·g/ml. The temperature of the test gas was kept at 200-600°C in the reactor pipe to cause a reaction between the nitrogen monoxide in the test gas with propylene.

**Table 4**

| Component | Concentration |
|---|---|
| Nitrogen monoxide | 500 ppm |
| Carbon monoxide | 100 ppm |
| Oxygen | 10 volume % |
| Propylene | 500 ppm |
| Nitrogen | Balance |
| Water | 10 volume % based on the total (100 volume %) of the above components. |

The concentration of NOx (sum of nitrogen monoxide and nitrogen dioxide) in the test gas after passing through the exhaust gas cleaner was measured by a chemiluminescence analyzer to determine the removal ratio of NOx. The results are shown in Table 5.

### Example 5

Porous γ-Al₂O₃ powder (specific surface area: 200 m²/g) was impregnated with 2 weight % of Ag by using an aqueous solution of AgNO3, and a commercially available honeycomb-type cordierite filter (diameter: 20 mm, thickness: about 30 mm) was coated with about 0.3 g of the above γ-Al₂O₃ powder carrying Ag, dried and heated at temperatures up to 600°C stepwise to obtain a first cleaner portion. Similarly, γ-Al₂O₃ powder was impregnated with 0.2 weight % of Pd by using an aqueous solution of palladium chloride, and 0.25 g of this γ-Al₂O₃ carrying Pd was applied to a similar honeycomb-type cordierite filter (diameter: 20 mm, thickness: about 8.4 mm), dried and heated at a temperature up to 700°C to obtain a second cleaner portion. The first and second cleaner portions were set in a reactor pipe such that the silver catalyst was disposed on the exhaust gas inlet side, and the Pd catalyst was disposed on the exhaust gas outlet side.

Next, a test gas having a composition shown in Table 4 was caused to pass through the reactor pipe at an apparent space velocity of 10,000 h⁻¹. The results are shown in Table 5.

### Example 6

Spherical titania pellets (diameter: 3 mm, and specific surface area: 200 m²/g) were impregnated with 0.2 weight % of Pt and 0.02 weight % of Rh in the same manner as in Example 4, and 1 g of the titania pellets carrying Pt and Rh were combined with 10 g of the first cleaner portion containing the silver catalyst used in Example 4 and set in a reactor pipe such that the silver catalyst was disposed on the exhaust gas inlet side, and the Pt/Rh catalyst was disposed on the exhaust gas outlet side. With the above exhaust gas cleaner, the removal ratio of NOx was measured with the test gas having a composition shown in Table 4. The results are shown in Table 5.

### Comparative Example 5

11 g of pellets made of porous γ-alumina carrying 0.2 weight % of Pt were set in a reactor pipe in the same manner as in Example 4 to measure the removal ratio of NOx from a test gas having a composition shown in Table 4. The results are shown in Table 5.

### Comparative Example 6

11 g of pellets made of porous γ-alumina carrying 2 weight % of Ag were set in a reactor pipe in the same manner as in Example 4 to measure the removal ratio of NOx from a test gas having a composition shown in Table 4. The results are shown in Table 5.

**Table 5**

| Removal Ratios of NOx, CO and HC | | | | | | |
|---|---|---|---|---|---|---|
| Reaction Temp. | Component Removed | Removal Ratio (%) | | | | |
| | | Ex.4 | Ex.5 | Ex.6 | Com.Ex.5 | Com.Ex.6 |
| 250°C | NOx | 23 | 20 | 25 | 15 | 5 |
| | CO | 85 | 100 | 70 | 70 | 60 |
| | HC | 60 | 65 | 50 | 55 | 45 |
| 300°C | NOx | 28 | 25 | 30 | 20 | 10 |
| | CO | 95 | 100 | 80 | 95 | 70 |
| | HC | 65 | 70 | 55 | 50 | 50 |
| 400°C | NOx | 55 | 53 | 58 | 2 | 60 |
| | CO | 100 | 100 | 100 | 100 | 88 |
| | HC | 98 | 96 | 98 | 80 | 75 |
| 500°C | NOx | 65 | 64 | 65 | 1 | 68 |
| | CO | 100 | 100 | 100 | 100 | 90 |
| | HC | 100 | 100 | 100 | 100 | 85 |
| 550°C | NOx | 45 | 45 | 43 | 1 | 45 |
| | CO | 100 | 100 | 100 | 100 | 95 |
| | HC | 100 | 100 | 100 | 100 | 90 |

As is clear from the above, the NOx was well removed in a wide temperature range and carbon monoxide and carbon. hydroxide were also effectively removed in Examples 4-6. On the other hand, a temperature range in which the removal ratio of NOx was high was narrow in Comparative Examples 5 and 6.

### Example 7

Porous γ-Al₂O₃ powder (specific surface area: 200 m²/g) was impregnated with 2 weight % of Ag and 1 weight % of In by using an aqueous solution of silver nitrate and an aqueous solution of indium nitrate, and a commercially available honeycomb-type cordierite filter (diameter: 20 mm, thickness: about 8.4 mm) was coated with 0.52 g of the above γ-Al₂O₃ powder carrying Ag and In, dried and heated at temperatures up to 600°C stepwise to obtain a first cleaner portion. Similarly, γ-Al₂O₃ powder was impregnated with 10.0 weight % of Cu by using an aqueous solution of copper nitrate, 0.4 weight % of La by using an aqueous solution of lanthanum nitrate, and 0.4 weight % of Cs by using an aqueous solution of cesium nitrate, and 0.52 g of this γ-Al₂O₃ carrying Cu, La and Cs was applied to a similar honeycomb-type filter (diameter: 20 mm, thickness: about 8.4 mm), dried and heated at a temperature up to 700°C to obtain a second cleaner portion.

The first and second cleaner portions were set in a reactor pipe such that the silver-based catalyst was disposed on the exhaust gas inlet side, and the Cu-based catalyst was disposed on the exhaust gas outlet side.

Next, a test gas having a composition shown in Table 3 above was caused to pass through the reactor pipe at a rate of 2.43 liters per minute (in a standard state), which corresponded to an apparent space velocity of 28,000 h⁻¹, a silver catalyst contact time of 0.13 sec·g/ml, and a Cu-based catalyst contact time of 0.13 sec·g/ml.

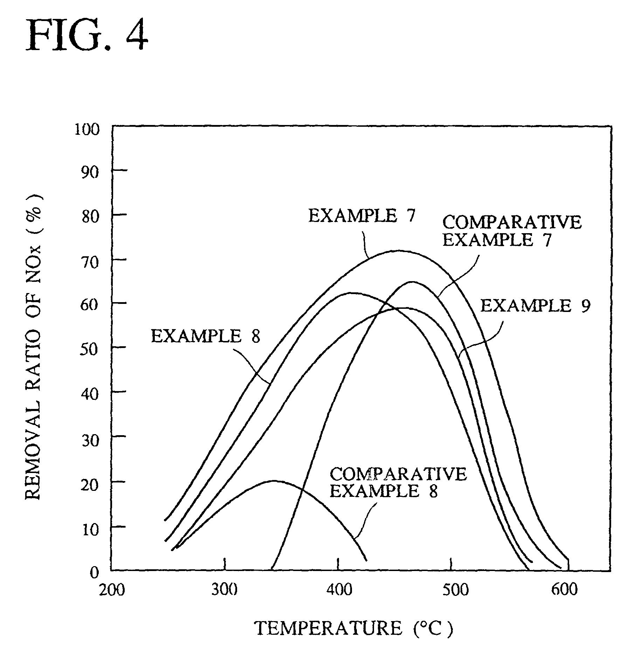

The temperature of the test gas was kept at 200-600°C in the reactor pipe to cause a reaction between the nitrogen monoxide in the test gas with propylene. The concentration of NOx (sum of nitrogen monoxide and nitrogen dioxide) in the test gas after passing through the exhaust gas cleaner was measured by a chemiluminescence analyzer to determine the removal ratio of NOx. The results are shown in Fig. 4.

### Example 8

Porous γ-Al₂O₃ powder (specific surface area: 200 m²/g) was impregnated with 2 weight % of Ag by using an aqueous solution of AgNO₃, and 1 weight % of Sn by using a solution of stannous chloride in ethyl alcohol, and the same honeycomb-type cordierite filter as in Example 7 was coated with 0.52 g of the above γ-Al₂O₃ powder carrying Ag and Sn, dried and heated in the same manner as in Example 7 to obtain a first cleaner portion. The first cleaner portion carrying the Ag-based catalyst was combined with the second cleaner portion of Example 7 carrying the Cu-based catalyst such that the Ag-based catalyst was disposed on the exhaust gas inlet side, and the Cu-based catalyst was disposed on the exhaust gas outlet side. With a test gas having a composition shown in Table 3, the removal ratio of NOx was measured in the same manner as in Example 7. The results are shown in Fig. 4.

### Example 9

Porous γ-Al₂O₃ powder was impregnated with 2 weight % of Ag by using an aqueous solution of AgNO₃, and 1 weight % of Ga by using an aqueous solution of gallium nitrate, and the same honeycomb-type cordierite filter as in Example 7 was coated with 0.52 g of the above γ-Al₂O₃ powder carrying Ag and Ga, dried and heated in the same manner as in Example 7 to obtain a first cleaner portion. The first cleaner portion carrying the Ag-based catalyst was combined with the second cleaner portion of Example 7 carrying the Cu-based catalyst such that the Ag-based catalyst was disposed on the exhaust gas inlet side, and the Cu-based catalyst was disposed on the exhaust gas outlet side. With a test gas having a composition shown in Table 3, the removal ratio of NOx was measured in the same manner as in Example 7. The results are shown in Fig. 4.

### Comparative Example 7

1.04 g of porous γ-alumina powder carrying 2 weight % of Ag and 1 weight % of In prepared in the same manner as in Example 7 was coated onto a honeycomb-type cordierite filter which was as long as double that of the honeycomb-type cordierite filter used in Example 7 to obtain an exhaust gas cleaner. This exhaust gas cleaner was set in a reactor pipe in the same manner as in Example 7 to measure the removal ratio of NOx from a test gas having a composition shown in Table 3. The results are shown in Fig. 4.

### Comparative Example 8

1.04 g of porous γ-alumina powder carrying 10 weight % of Cu, 0.4 weight % of La and 0.4 weight % of Cs prepared in the same manner as in Example 7 was coated onto a honeycomb-type cordierite filter which was as long as double that of the honeycomb-type cordierite filter used in Example 7 to obtain an exhaust gas cleaner. This exhaust gas cleaner was set in a reactor pipe in the same manner as in Example 7 to measure the removal ratio of NOx from a test gas having a composition shown in Table 3. The results are shown in Fig. 4.

As is clear from the above, the NOx was well removed in a wide temperature range in Examples 7-9 in which the Ag-based catalyst and the Cu-based catalyst were combined. On the other hand, a temperature range in which the removal ratio of NOx was high was narrow in Comparative Examples 7 and 8 in which either one of the Ag-based catalyst and the Cu-based catalyst was omitted.

As described above in detail, by the exhaust gas cleaner according to the present invention, NOx can efficiently be removed from the exhaust gas having an excess oxygen concentration in a wide temperature range even when about 10% of water is contained in tile exhaust gas. Further, in the case of the mixed catalyst-type exhaust gas cleaner, the NOx-removing temperature can be as low as about 500°C or lower.

The exhaust gas cleaner of the present invention is effective for cleaning exhaust gases such as those discharged from various combustors, automobile engines, etc.

## Claims

1. An exhaust gas cleaner for cleaning an exhaust gas containing nitrogen oxides and oxygen in an amount larger than its stoichiometric amount relative to unburned components in said exhaust gas, which comprises a mixture of (1) a first catalyst comprising 0.1-15 weight % (on a metal basis), of a first catalytically active component consisting essentially of Ag supported on a porous inorganic oxide body; and (2) a second catalyst comprising 0.5-20 weight % (on a metal basis) of a second catalytically active component supported on a porous inorganic oxide body, said second catalytically active component consisting essentially of (i) at least one alkali metal element; (ii) at least one element selected from Cu, Co, Mn and V; and (iii) at least one rare earth element,
all of said percentages being based on the amount of said porous inorganic oxide body on which each component is supported.

2. An exhaust gas cleaner for cleaning an exhaust gas containing nitrogen oxides and oxygen in an amount larger than its stoichiometric amount relative to unburned components in said exhaust gas, which comprises a cleaner substrate made of ceramics or metals, a first catalyst supported on said cleaner substrate on the exhaust gas inlet side thereof, and a second catalyst supported on said cleaner substrate on the exhaust gas outlet side thereof, wherein
(1) said first catalyst comprises 0.1-15 weight % (on a metal basis) of a first catalytically active component consisting essentially of Ag supported on a first porous inorganic oxide body; and (2) said second catalyst comprises a second catalytically active component supported on a second porous inorganic oxide body, said second catalytically active component consisting essentially of (i) 0.1-15 weight % (on a metal basis) of Cu and optionally 4 weight % or less (on a metal basis) of at least one element selected from the group consisting of alkali metal elements
and rare earth elements, or (ii) 2 weight % (on a metal basis) or less, but not including 0 weight %, of at least one element selected from the group consisting of Pt, Pd, Ru, Rh and Ir, all of said percentages being based on the amount of said porous inorganic oxide body on which each component is supported.

3. An exhaust gas cleaner for cleaning an exhaust gas containing nitrogen oxides and oxygen in an amount larger than its stoichiometric amount relative to unburned components in said exhaust gas, which comprises a first catalyst on the exhaust gas inlet side and a second catalyst on the exhaust gas outlet side,
wherein
(1) said first catalyst comprises 0.2-20 weight % (on a metal basis) of a first catalytically active component supported on a first porous inorganic oxide body, said first catalytically active components consisting essentially of Ag and at least one element selected from the group consisting of Sn, Al, Ga and In; and
(2) said second catalyst comprises a second catalytically active component supported on a second porous inorganic oxide body, said second catalytically active component consisting essentially of 0.1-15 weight % (on a metal basis) of Cu and optionally 4 weight % or less (on a metal basis) of at least one element selected from the group consisting of alkali metal elements and rare earth elements,
all of said percentages being based on the amount of said porous inorganic oxide body on which each component is supported.

4. The exhaust gas cleaner according to any one of claims 1 to 3, wherein each porous inorganic oxide body is made of alumina, titania, zirconia or a composite oxide thereof.

5. The exhaust gas cleaner according to claim 4, wherein each porous inorganic oxide body is made of alumina or an alumina composite oxide.

6. The exhaust gas cleaner according to any one of claims 1 to 5, wherein each porous inorganic oxide body is in the form of powder coated onto a cleaner substrate.

7. The exhaust gas cleaner according to any one of claims 1 to 5, wherein each porous inorganic oxide body is in the form of pellets or granules.

8. A method of cleaning an exhaust gas containing nitrogen oxides and oxygen in an amount larger than its stoichiometric amount relative to unburned components in said exhaust gas, which comprises (a) disposing said exhaust gas cleaner as defined in any preceding claim, in a flow path of said exhaust gas;
(b) introducing hydrocarbons and/or oxygen-containing organic compounds into said exhaust gas on the upstream side of said exhaust gas cleaner; and (c) bringing said exhaust gas into contact with said exhaust gas cleaner at a temperature of 200-600°C, thereby removing said nitrogen oxides.

9. A method of cleaning an exhaust gas containing nitrogen oxides and oxygen in an amount larger than its stoichiometric amount relative to unburned components in said exhaust gas, which comprises (a) disposing said exhaust gas cleaner as defined in claim 3, in a flow path of said exhaust gas; and (b) bringing said exhaust gas into contact with said exhaust gas cleaner at a temperature of 200-600°C, thereby causing a reaction between said nitrogen oxides and hydrocarbons remaining in said exhaust gas to remove said nitrogen oxides.

## Patentansprüche

1. Abgasreinigungsvorrichtung zur Reinigung eines Abgases, das Stickstoffoxide und Sauerstoff in einer Menge aufweist, die größer ist als deren stöchiometrische Menge im Verhältnis zu unverbrannten Bestandteilen in dem Abgas, die eine Mischung aufweist von (1) einem ersten Katalysator, der 0,1 - 15 Gewichts-% (auf einer Metallbasis) von einer ersten katalytisch aktiven Verbindung aufweist, die im wesentlichen aus auf einem porösen anorganischen Oxidkörper getragenem Ag besteht, und (2) einem zweiten Katalysator, der 0,5 - 20 Gewichts-% (auf einer Metallbasis) von einer zweiten auf einem porösen anorganischen Oxidkörper getragenen katalytisch aktiven Verbindung aufweist, wobei die zweite katalytisch aktive Verbindung im wesentlichen aus (i) mindestens einem Alkalimetallelement, (ii) mindestens einem aus Cu, Co, Mn und V ausgewählten Element und (iii) mindestens einem Seltenerdelement besteht,
wobei alle diese Prozentangaben auf die Menge des porösen anorganischen Oxidkörpers bezogen sind, auf dem jede Verbindung getragen ist.

2. Abgasreinigungsvorrichtung zur Reinigung eines Abgases, das Stickstoffoxide und Sauerstoff in einer Menge aufweist, die größer ist als deren stöchiometrische Menge im Verhältnis zu unverbrannten Bestandteilen in dem Abgas, die ein aus Keramiken oder Metallen hergestelltes Reinigungssubstrat, einen auf der Abgaseinlaßseite des Reinigungssubstrats getragenen ersten Katalysator und einen auf der Abgasauslaßseite des Reinigungssubstrats getragenen zweiten Katalysator aufweist, wobei
(1) der erste Katalysator 0,1 - 15 Gewichts-% (auf einer Metallbasis) von einer ersten katalytisch aktiven Verbindung aufweist, die im wesentlichen aus auf einem ersten porösen anorganischen Oxidkörper getragenem Ag besteht, und (2) der zweite Katalysator eine zweite auf einem zweiten porösen anorganischen Oxidkörper getragene katalytisch aktive Verbindung aufweist, wobei die zweite katalytisch aktive Verbindung im wesentlichen aus (i) 0,1 - 15 Gewichts-% (auf einer Metallbasis) Cu und wahlweise 4 Gewichts-% oder weniger (auf einer Metallbasis) von mindestens einem Element, das aus der aus Alkalimetallelementen und Seltenerdelementen bestehenden Gruppe ausgewählt ist, oder (ii) 2 Gewichts-% (auf einer Metallbasis) oder weniger, aber nicht einschließlich 0 Gewichts-% von mindestens einem Element, das aus der aus Pt, Pd, Ru, Rh und Ir bestehenden Gruppe ausgewählt ist, besteht, wobei alle diese Prozentangaben auf die Menge des porösen anorganischen Oxidkörpers bezogen sind, auf dem jede Verbindung getragen ist.

3. Abgasreinigungsvorrichtung zur Reinigung eines Abgases, das Stickstoffoxide und Sauerstoff in einer Menge aufweist, die größer ist als deren stöchiometrische Menge im Verhältnis zu unverbrannten Bestandteilen in dem Abgas, die einen ersten Katalysator auf der Abgaseinlaßseite und einen zweiten Katalysator auf der Abgasauslaßseite aufweist, wobei
(1) der erste Katalysator 0,2 - 20 Gewichts-% (auf einer Metallbasis) von einer ersten auf einem porösen anorganischen Oxidkörper getragenen katalytisch aktiven Verbindung aufweist, wobei die ersten katalytisch aktiven Verbindungen im wesentlichen aus Ag und aus mindestens einem Element bestehen, das aus der aus Sn, Al, Ga und In bestehenden Gruppe ausgewählt ist, und
(2) der zweite Katalysator eine zweite auf einem zweiten porösen anorganischen Oxidkörper getragene katalytisch aktive Verbindung aufweist, wobei die zweite katalytisch aktive Verbindung im wesentlichen aus 0,1 - 15 Gewichts-% (auf einer Metallbasis) Cu und wahlweise 4 Gewichts-% oder weniger (auf einer Metallbasis) von mindestens einem Element besteht, das aus der aus Alkalimetallelementen und Seltenerdelementen bestehenden Gruppe ausgewählt ist,
wobei alle diese Prozentangaben auf die Menge des porösen anorganischen Oxidkörpers bezogen sind, auf dem jede Verbindung getragen ist.

4. Abgasreinigungsvorrichtung nach einem der Ansprüche 1 bis 3, wobei jeder poröse anorganische Oxidkörper aus Aluminium, Titan, Zirkon oder einem Mischoxid davon hergestellt ist.

5. Abgasreinigungsvorrichtung nach Anspruch 4, wobei jeder poröse anorganische Oxidkörper aus Aluminium oder einem Aluminiummischoxid hergestellt ist.

6. Abgasreinigungsvorrichtung nach einem der Ansprüche 1 bis 5, wobei jeder poröse anorganische Oxidkörper in Form eines Pulvers, das auf ein Reinigungssubstrat geschichtet ist, vorliegt.

7. Abgasreinigungsvorrichtung nach einem der Ansprüche 1 bis 5, wobei jeder poröse anorganische Oxidkörper in Form von Pellets bzw. Kügelchen oder Körnern vorliegt.

8. Verfahren zur Reinigung eines Abgases, das Stickstoffoxide und Sauerstoff in einer Menge aufweist, die größer ist als deren stöchiometrische Menge im Verhältnis zu unverbrannten Bestandteilen in dem Abgas, welches folgende Schritte umfaßt:
(a) Aufstellen der Abgasreinigungsvorrichtung nach einem der vorhergehenden Ansprüche, in einen Strömungsweg des Abgases,
(b) Einführen von kohlenwasserstoff- und/oder sauerstoffhaltigen organischen Verbindungen in das Abgas an der stromaufwärtigen Seite der Abgasreinigungsvorrichtung, und
(c) in Kontakt bringen des Abgases mit der Abgasreinigungsvorrichtung bei einer Temperatur von 200 bis 600 °C, und dadurch Entfernen der Stickstoffoxide.

9. Verfahren zur Reinigung eines Abgases, das Stickstoffoxide und Sauerstoff in einer Menge aufweist, die größer ist als deren stöchiometrische Menge im Verhältnis zu unverbrannten Bestandteilen in dem Abgas, das folgende Schritte umfaßt:
(a) Aufstellen der Abgasreinigungsvorrichtung nach Anspruch 3 in einen Strömungsweg des Abgases, und
(b) in Kontakt bringen des Abgases mit der Abgasreinigungsvorrichtung bei einer Temperatur von 200 bis 600 °C, und dadurch Verursachen einer Reaktion zwischen den Stickstoffoxiden und in dem Abgas verbleibenden Kohlenwasserstoffen, um die Stickstoffoxide zu entfernen.

## Revendications

1. Epurateur de gaz d'échappement destiné à épurer un gaz d'échappement contenant des oxydes d'azote et de l'oxygène en une quantité supérieure à sa quantité stoechiométrique par rapport aux composants non brûlés dans ledit gaz d'échappement, qui comprend un mélange de (1) un premier catalyseur comprenant de 0,1 à 15% en poids (rapporté au métal) d'un premier composant catalytiquement actif, constitué essentiellement de Ag supporté sur un corps en oxyde inorganique poreux; et (2) un deuxième catalyseur comprenant de 0,5 à 20% en poids (rapporté au métal) d'un deuxième composant catalytiquement actif supporté sur un corps en oxyde inorganique poreux, ledit deuxième composant catalytiquement actif étant constitué essentiellement de (i) au moins un élément métal alcalin; (ii) au moins un élément choisi parmi Cu, Co, Mn et V; et (iii) au moins un élément terre rare,
lesdits pourcentages étant tous par rapport à la quantité dudit corps en oxyde inorganique poreux sur lequel chaque composant est supporté.

2. Epurateur de gaz d'échappement destiné à épurer un gaz d'échappement contenant des oxydes d'azote et de l'oxygène en une quantité supérieure à sa quantité stoechiométrique par rapport aux composants non brûlés dans ledit gaz d'échappement, qui comprend un substrat d'épurateur composé de céramiques ou de métaux, un premier catalyseur supporté sur ledit substrat d'épurateur sur son côté d'entrée de gaz d'échappement, et un deuxième catalyseur supporté sur ledit substrat d'épurateur sur son côté de sortie de gaz d'échappement, dans lequel
(1) ledit premier catalyseur comprend de 0,1 à 15% en poids (rapporté au métal) d'un premier composant catalytiquement actif constitué essentiellement de Ag supporté sur un premier corps en oxyde inorganique poreux; et (2) ledit deuxième catalyseur comprend un deuxième composant catalytiquement actif supporté sur un deuxième corps en oxyde inorganique poreux, ledit deuxième composant catalytiquement actif étant constitué essentiellement de (i) de 0,1 à 15% en poids (rapporté au métal) de Cu et éventuellement de 4% en poids ou moins (rapporté au métal) d'au moins un élément choisi parmi le groupe constitué d'éléments métaux alcalins et d'éléments terres rares, ou (ii) 2% en poids (rapporté au métal) ou moins, mais à l'exclusion de 0% en poids, d'au moins un élément choisi parmi le groupe constitué de Pt, de Pd, de Ru, de Rh et de Ir, lesdits pourcentages étant tous par rapport à la quantité dudit corps en oxyde inorganique poreux sur lequel chaque composant est supporté.

3. Epurateur de gaz d'échappement destiné à épurer un gaz d'échappement contenant des oxydes d'azote et de l'oxygène en une quantité supérieure à sa quantité stoechiométrique par rapport aux composants non brûlés dans ledit gaz d'échappement, qui comprend un premier catalyseur sur le côté d'entrée de gaz d'échappement et un deuxième catalyseur sur le côté de sortie de gaz d'échappement, dans lequel
(1) ledit premier catalyseur comprend de 0,2 à 20% en poids (rapporté au métal) d'un premier composant catalytiquement actif supporté sur un premier corps en oxyde inorganique poreux, lesdits premiers composants catalytiquement actifs étant constitués essentiellement de Ag et d'au moins un élément choisi parmi le groupe constitué de Sn, de Al, de Ga et de In; et
(2) ledit deuxième catalyseur comprend un deuxième composant catalytiquement actif supporté sur un deuxième corps en oxyde inorganique poreux, ledit deuxième composant catalytiquement actif étant constitué essentiellement de 0,1 à 15% en poids (rapporté au métal) de Cu et éventuellement de 4% en poids ou moins (rapporté au métal) d'au moins un élément choisi parmi le groupe constitué d'éléments métaux alcalins et d'éléments terres rares,
lesdits pourcentages étant tous par rapport à la quantité dudit corps en oxyde inorganique poreux sur lequel chaque composant est supporté.

4. Epurateur de gaz d'échappement selon l'une quelconque des revendications 1 à 3, dans lequel chaque corps en oxyde inorganique poreux est composé d'alumine, d'oxyde de titane, de zircone ou d'un oxyde composite de ceux-ci.

5. Epurateur de gaz d'échappement selon la revendication 4, dans lequel chaque corps en oxyde inorganique poreux est composé d'alumine ou d'un oxyde composite d'alumine.

6. Epurateur de gaz d'échappement selon l'une quelconque des revendications 1 à 5, dans lequel chaque corps en oxyde inorganique poreux est sous la forme d'une poudre appliquée sur un substrat d'épurateur.

7. Epurateur de gaz d'échappement selon l'une quelconque des revendications 1 à 5, dans lequel chaque corps en oxyde inorganique poreux est sous la forme de pastilles ou de granules.

8. Procédé d'épuration d'un gaz d'échappement contenant des oxydes d'azote et de l'oxygène en une quantité supérieure à sa quantité stoechiométrique par rapport aux composants non brûlés dans ledit gaz d'échappement, qui comprend (a) la mise en place dudit épurateur de gaz d'échappement tel que défini dans l'une quelconque des revendications précédentes, dans une voie d'écoulement dudit gaz d'échappement; (b) l'introduction d'hydrocarbures et/ou de composés organiques oxygénés dans ledit gaz d'échappement du côté amont dudit épurateur de gaz d'échappement ; et (c) la mise en contact dudit gaz d'échappement avec ledit épurateur de gaz d'échappement à une température de 200 à 600°C, en éliminant ainsi lesdits oxydes d'azote.

9. Procédé d'épuration d'un gaz d'échappement contenant des oxydes d'azote et de l'oxygène en une quantité supérieure à sa quantité stoechiométrique par rapport aux composants non brûlés dans ledit gaz d'échappement, qui comprend (a) la mise en place dudit épurateur de gaz d'échappement tel que défini dans la revendication 3, dans une voie d'écoulement dudit gaz d'échappement; et (b) la mise en contact dudit gaz d'échappement avec ledit épurateur de gaz d'échappement à une température de 200 à 600°C, en entraînant ainsi une réaction entre lesdits oxydes d'azote et des hydrocarbures restant dans ledit gaz d'échappement en vue d'éliminer lesdits oxydes d'azote.
